# EUROPÄISCHE PATENTSCHRIFT

(11) **EP 0 673 145 B1**
(45) Veröffentlichungstag und Bekanntmachung des Hinweises auf die Patenterteilung: **11.01.2006**
(21) Anmeldenummer: 95103017.0
(22) Anmeldetag: 03.03.1995
(51) Int. Cl.: H04M 3/54, H04M 3/50, H04M 1/65, H04Q 11/04

(54) **Telekommunikationssystem und Telekommunikationsendeeinrichtung**
Telecommunication system and telecommunication terminal
Système de télécommunication et dispositif terminal de télécommunication

(30) Priorität: 15.03.1994 DE 4408598
(43) Veröffentlichungstag der Anmeldung: 20.09.1995
(73) Patentinhaber: Alcatel, 75008 Paris (FR)
(72) Erfinder: Bergler, Frank, D-75223 Niefern (DE)
(74) Vertreter: Knecht, Ulrich Karl

(56) Entgegenhaltungen:
- EP-A- 0 330 856
- WO-A-87/07801
- DE-A- 3 234 081
- US-A- 5 175 760
- PC USER, Nr. 226, 12.Januar 1994 GB, Seiten 53-54, CLARE NEWSOME 'IMPRESSIVE PDA COMMUNICATION'
- IBM TECHNICAL DISCLOSURE BULLETIN, Bd. 36, Nr. 6B, Juni 1993 NEW YORK US, Seiten 249-250, 'OPERATING SYSTEM TERMINATION VIA TELEPHONE CRITERIA REMINDER'
- IBM TECHNICAL DISCLOSURE BULLETIN, Bd. 36, Nr. 11, November 1993 NEW YORK US, Seite 529 'PHONEMAIL ICON NOTIFICATION AND SELECTION'
- PATENT ABSTRACTS OF JAPAN vol. 12 no. 500 (E-699) ,27.Dezember 1988 & JP-A-63 211950 (CANON INC) 5.September 1988,
- VON ZSCHAAGE KLAUS-J.: 'Computer an der Telefonstrippe' FUNKSCHAU Nr. 16, 1990, Seiten 55 - 58

## Beschreibung

Die Erfindung betrifft eine Telekommunikationseinrichtung gemäß dem Oberbegriff des Anspruches 1.

Aus dem Stand der Technik ist eine sogenannte Anrufweiterschaltung bekannt. Dabei handelt es sich um einen Dienst, bei dem ein Anruf, der einen bestimmten Telefonanschluß erreichen soll, z.B. einen Telefonanschluß im Büro eines Mitarbeiters, an einen anderen Telefonanschluß, z.B. dem privaten Anschluß des Mitarbeiters, weitergeleitet wird. Die Weiterleitung des Anrufs wird dem Anrufer durch eine vorgegebene oder individuelle Nachricht mitgeteilt. Eine Voraussetzung für die Anrufweiterschaltung ist die Erreichbarkeit des Anschlußes im Selbstwähldienst (aus ISDN Praxis, "Das Handbuch der neuen Sprach-, Text-, Bild-, Daten-Kommunikation", Neue Mediengesellschaft Ulm, 04/93, Kapitel 1.3, Seiten 18-19).

Weiterhin ist die Verwendung einer Datenverarbeitungsanlage in Verbindung mit einer Telekommunikationsanlage bekannt. Eine breite Anwendung findet diese Kombination insbesondere bei Branchen und innerbetrieblichen Strukturen, in denen häufig Telefonarbeitsplätze anzutreffen sind, z.B. Kundendienst, Telefonverkauf, Bestellannahme, Hotels, Gesundheitswesen, Kreditwesen usw. ("Computer an der Telefonstrippe", Klaus-J. Zschaage; Funkschau 16/1990, Seiten 55 - 58).

In jüngster Zeit finden digitale Kommunikationsanwendungen mit Schrifterkennung, wie Personal-Diaital-Assistents (PDA), auch als Messagepads bezeichnet, eine immer breitere Anwendung. Mittels dieser Geräte werden Notizen, die handschriftlich mit einem speziellen Stift auf einer berührungsempfindlichen Schicht aufgeschrieben werden erkannt. Funktionen wie z.B. das Versenden eines Faxes, das Verschicken einer Nachricht, auch Mail genannt, erfolgt, insofern daß ein Foxmodem angeschlossen ist, indem ein spezielles Feld mittels des Stiftes betätigt wird. Kommandos können ebenfalls handschriftlich eingegeben, markiert und somit zur Anwendung gebracht werden. ("Look and feel"; Apple Newton Mossagepad; Funkschau 19/1993; S. 16-17)

Außerdem sind Telkommunikationseinrichtungen bekannt, die Nutzinformationen speichern, die sie infolge eines ankommenden Rufes empfangen (z.B. Telefon mit Anrufbeantworter). Um auf die empfangene Nutzinformation reagieren zu können, muß der Angerufenen die gespeicherte Nutzinformation zuvor abfragen. Eine Selektion der ankommenden Rufe erfolgt nicht.

Aus PC-USER, 12-25 Januar 1994, ist weiterhin ein Personal Digital Assistant bekannt, mit dem Dokumente per Telefax oder Email versandt werden können.

US-A-5 175 760 offenbart eine Kommunikationsvorrichtung mit einer Datenübertragungsfunktions, bei der innerhalb einer bestimmten, vorgebaren Zeitperiode aufgenommene Nachrichten an ein weiteres vorbestimmte Kommunikationsendgerät weitergeleitet werden.

Aus WO-A-87/07801 ist ein Unified Messaging System bekannt, das eine einzige elektronische Mailbox für unterschiedliche Arten von Nachrichten umfaßt.

Ein gattungsgemäßes Telekommunikationssystem bzw. Telekommunikationsendeinrichtung ist aus EP-A-0 330 856 bekannt, wobei das Telekommunikationsendgerät in Form eines automatischer Anrufbeantworters offenbart ist, der über eine Vermittlungsstelle mit einem PC (Datenverarbeitungsendgerät) gekoppelt ist. In Abhängigkeit von der ermittelten Rufnummer des Anrufenden werden Anrufe bzw. Nachrichten angenommen, abgelehnt, gespeichert und/oder weitergeleitet.

Das bekannte Telekommunikationssystem hat den Nachteil, daß eine unterschiedliche Behandlung von Nachrichten, die von denselben Teilnehmeranschluß übermittelt werden, nicht möglich ist.

Der Erfindung liegt die Aufgabe zugrunde, ein Telekommunikationssystem und ein Telekommunikationsendgerät zu schaffen, die unabhängig von der Rufnummer bzw. vorn Teilnehmeranschluß des Anrufers eine flexible Benachrichtigung des Angerufenen bzw. Behandlung von hinterlassenen Nachrichten ermöglicht.

Die Aufgabe wird erfindungsgemäße durch eine gattungsgemäße Telekommunikationsendeinrichtung gelöst.

Demnach sind bei einer erfindungsgemäßen Telekommunikationsendeinrichtung das Telekommunikationsendgerät und das Datenverarbeitungsendgerät derart ausgestaltet sind, daß zumindest Nutzinformation eines eingehenden Rufes von dem Telekommunikationsendgerät an das Datenverarbeitungsendgerät übertragen und zumindest ein Teil der Nutzinformation von dem Datenverarbeitungsendgeröt nach mindestens einem vorgegebenen Kriterium ausgewertet wird, wobei, falls das zumindest eine Kriterium erfüllt ist, eine Meldung an mindestens ein weiteres Telekommunikationsendgerät gesendet wird.

Durch die Auswertung der Nutzinformation, also des Inhaltes oder eines Teil des Inhaltes der Nachricht an sich, wird die Grundlage für eine inhaltliche Beurteilung der Nachricht an sich geschaffen. Erst dadurch wird auch eine unterschiedliche und flexible Handhabung bzw. Bearbeitung von Nachrichten/Anrufen, die von denselben Anschluß ausgeführt werden, ermöglicht. In vorteilhafter Art und Weise wird erfindungsgemäß auf Inhalt, Art, und/oder Bedeutung der Nachricht, und zwar unabhängig von der jeweiligen Kommunikationsverbindung, abgestellt, um so eine qualitative Beurteilung der Nachricht zu erhalten. Eine solche qualitative Beurteilung führt zu einer verbesserten und viel effizienteren Selektion von Anrufen/Nachrichten als im Stand der Technik, da die Verwendung der Rufnummer des Anrufenden als Selektionskriterium, wie im Stand der Technik, wenn überhaupt, nur in Ausnahmefällen mit dem Inhalt einer Nachricht korreliert.

Weitere Vorteile und Ausgestaltungen der Erfindung ergeben sich aus den abhängigen Ansprüchen, der Beschreibung und der beiliegenden Zeichnung.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand eines Ausführungsbeispieles in der Zeichnung schematisch dargestellt und wird im folgenden unter Bezugnahme auf die Zeichnung ausführlich beschrieben.

Folgende Figuren zeigen:
- Fig. 1: Blockschaltbild einer Telekommunikationseinrichtung nach Anspruch 1.
- Fig. 2: Ablaufdiagramm bei Verwendung der Kommunikationseinrichtung.
- Fig. 3: zeigt in vereinfachter Darstellung die Telekommunikationsendeinrichtung innerhalb eines Multi-Media-fähigen Telekommunikationsnetzes,
- Fig. 4: zeigt einen schematischen Aufbau des Telekommunikationsendgerätes mittels eines Telekommunikationsendgerätes und eines Personal-Computers, und
- Fig. 5: zeigt schematisch die Auswertung ankommender Daten und die Erstellung von zu sendenden Meldungen innerhalb des Personal-Computers.

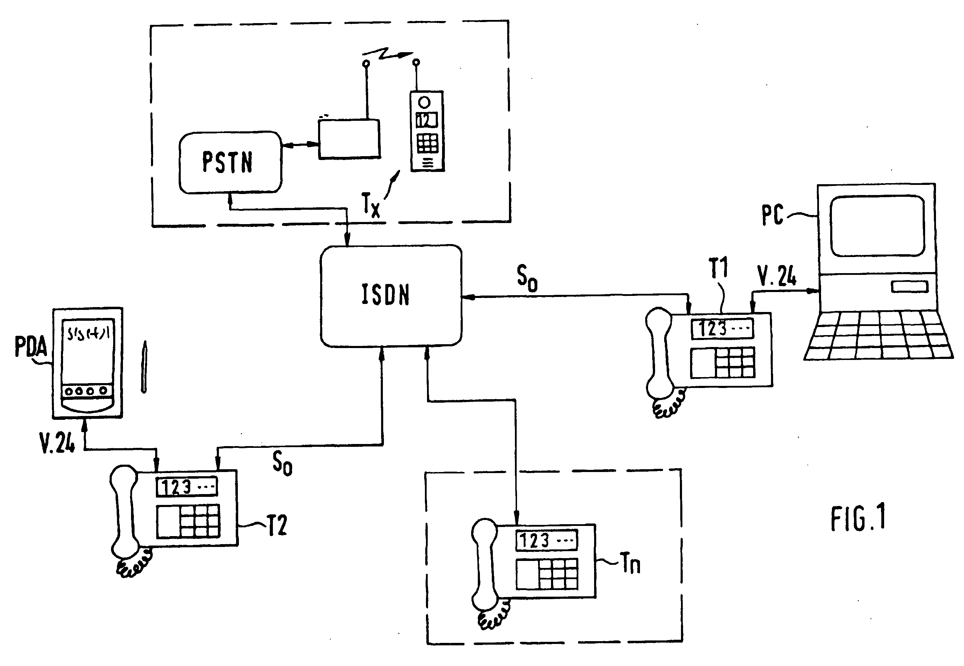

Im folgenden wird anhand von Figur 1 ein mögliches Ausführungsbeispiel des Telekommunikationssystems erläutert.

Ein Telekommunikationssystem besteht aus einem ersten Telekommunikationsendgerät T1 und einem damit verbundenen Datenverarbeitungsendgerät PC. Das Telekommunikationsendgerät T1, beispielsweise ein Telefon, ist über ein V.24 Schnittstelle mit dem Datenverarbeitungsendgerät PC, beispielsweise einem Personal Computer, verbunden. Das erste Telekommunikationsendgerät T1 ist beispielsweise über eine Sₒ-Schnittstelle und eine Leitung mit einem Telekommunikationsnetz ISDN verbunden. An das Telekommunikationsnetz ISDN ist mindestens ein weiteres Telekommunikationsendgerät T2 ebenfalls z.B. über eine Sₒ-Schnittstelle angeschlossen. Das mindestens eine weitere Telekommunikationsendgerät T2, beispielsweise ein Telefon, ist mit einer digitalen Kommunikationseinrichtung mit Schrifterkennung PDA verbunden. Die digitale Kommunikationseinrichtung mit Schrifterkennung PDA kann z.B. ein sogenannter Personal-Digital-Assistent sein, ein "Pen-Computer" der mittels eines speziellen Stiftes, einer druckempfindlichen Oberfläche und einer speziellen Software in der Lage ist, Handschriften zu erkennen und in Druckbuchstaben umzusetzen. Mit dieser Kommunikationseinrichtung mit Schrifterkennung PDA können ebenfalls Funktionen ausgelöst werden, entweder durch spezielle Markierungen im Text, oder durch Betätigung eines Feldes mit dem Stift.

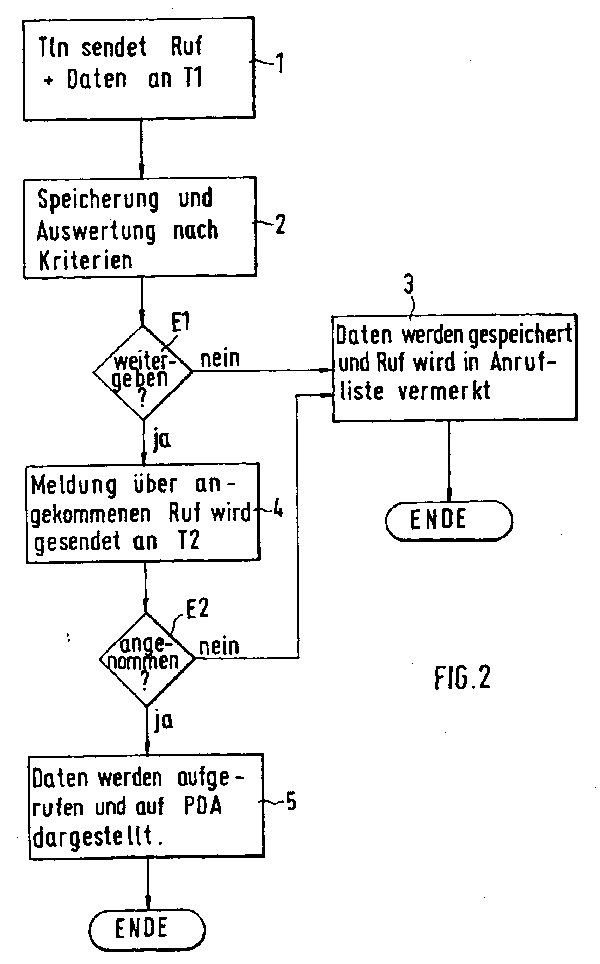

Eine Funktion der Kommunikationsvorrichtung könnte folgendermaßen erfolgen und wird anhand von Figur 2 erläutert. In einem ersten Schritt 1 sendet ein Teilnehmer Tln einen Ruf und überträgt Daten an ein erstes Telekommunikationsendgerät T1 mit dem daran angeschlossenen Datenverarbeitungsendgerät PC. Hierbei können das Telekommunikationsendgerät T1 und das Datenverarbeitungsendgerät PC auch in einem Datenverarbeitungsendgerät mit Telefonfunktion integriert sein.

In einem zweiten Schritt 2 werden Nummer, Name und die Daten des Teilnehmers Tln in dem Datenverarbeitungsendgerät PC gespeichert. Sowohl Nummer, Name als auch die Daten werden auf Erfüllung vordefinierte Kriteria hin untersucht. Ein Kriterium kann zum Beispiel der Name des rufenden Teilnehmers, oder aber bei Aufgabe einer Bestellung eine Stückzahl wie z.B. "100 Stk. von Produkt X" sein. Ebenso wäre es möglich, daß ein Name in Kombination mit einem Schlüsselwort in den Daten, wie z.B. "dringenst" die Kriterien erfüllen. Um zu verhindern, daß Unberechtigte einen Schreib- und/oder Lesezugriff auf die Daten haben, können diese Zugriffe mittels spezieller Paßworte geschützt werden. So wird beispielsweise einem Kunden der lediglich einen Schreibzugriff benötigt, ein anderes Paßwort mitgeteilt als das, das der Besitzer selbst verwendet, der einen Schreib- und Lesezugriff benötigt. In einem ersten Entscheidungsglied E1 wird entschieden, ob das oder die Kriterien erfüllt sind, und ob eine Meldung über den angekommenen Ruf an das mindestens eine weitere Teilnehmerendgerät T2 weitergegeben werden soll.

Für den, Fall daß keine Meldung weitergegeben werden soll, werden in einem dritten Schritt 3 die Daten gespeichert, und der Ruf wird in einer Anrufliste z.B. mit Datum und Uhrzeit verzeichnet.

Für den Fall, daß eine Meldung an das mindestens eine weitere Teilnehmerendgerät T2 weitergegeben werden soll, wird eine Meldung abgefaßt. Diese kann entweder eine Standardmitteilung sein wie z.B. "Wichtiger Anruf registriert !" oder aber sich aus Teilen der übertragenene Daten zusammensetzen wie z.B. "Bestellung 1000 Stk. Produkt X !". Die Meldung wird in einem vierten Schritt 4 an das mindestens eine weitere Telekommunikationsendgerät T2 gesendet.

In einem zweiten Entscheidungsglied E2 wird festgestellt, ob die Meldung über den angekommenen Ruf angenommen wurde. Ist dies nicht der Fall, so wird der zuvor beschriebene dritte Schritt 3 ausgelöst.

Wird die Meldung über den angekommenene Ruf angenommen, kann in einem fünften Schritt 5 die digitale Kommunikationseinrichtung mit Schrifterkennung PDA über das mindestens eine weitere Telekommunikationsendgerät T2 die Daten aus dem Speicher aufrufen und darstellen. Somit kann exakt sichtbar gemacht werden, was der genaue Inhalt der Daten ist. Natürlich ist es ebenfalls möglich, nur die relevanten Daten darzustellen.

Die solchermaßen dargestellten Daten können in diesem Fall direkt an der digitalen Kommunikationseinrichtung mit Schrifterkennung PDA editiert, korrigiert und kommentiert werden. Kommentierte, als Text dargestellt Daten können dann zurückgespeichert oder aber direkt weiterversendet werden. Weitere Funktionen die mittels der digitalen Kommunikationseinrichtung mit Schrifterkennung PDA aufrufbar sind, sind unter anderem das Lesen und Editieren in Anruflisten und Telefonbüchern. Die Daten sind in dem Speicher des Datenverarbeitungsendgerätes PC gespeichert und werden partiell übertragen und auf der Kommunikationseinrichtung angezeigt. Desweiteren ist beispielsweise eine Präsentationseinrichtungsfunktion verfügbar, die sogenannte White-Boardingsfunktion. Mittels dieser kann ein Text in einem beliebigen, selbst definierten Textformat aufbereitet und versendet werden.

Eine Weiterführung der Erfindung wird im folgenden ebenfalls anhand von Figur 1 erläutert.

Zusätzlich zu den zuvor beschriebenen Geräten und Vorrichtungen ist an das Telekommunikationsnetz ISDN ein weiteres Telekommunikationsendgerät Tₙ anschließbar, an das ebenfalls oder alternativ zu dem mindestens einen weiteren Telekommunikationsendgerät T2 eine Meldung über einen angekommenen Ruf abgegeben wird. Ebenso kann über das Telekommunikationsnetz ISDN ein weiteres Netz PSTN, z.B. ein privates Netz, anschließbar sein, über das ein weiteres Telekommunikationsendgerät Tₓ, z.B. in Form eines Funkrufempfängers anschließbar ist. Heutige Funkrufempfänger können ebenfalls Meldungen anzeigen. Wird z.B. ein Benutzer der Kommunikationseinrichtung über einen Funkrufempfänger erreicht, weiß er um die Wichtigkeit des angekommenen Rufes, und er kann eine digitale Kommunikationseinrichtung mit Schrifterkennung PDA, die z.B. ebenfalls mit einem Funknetz verbunden ist, dazu verwenden, sich den kompletten Text anzusehen.

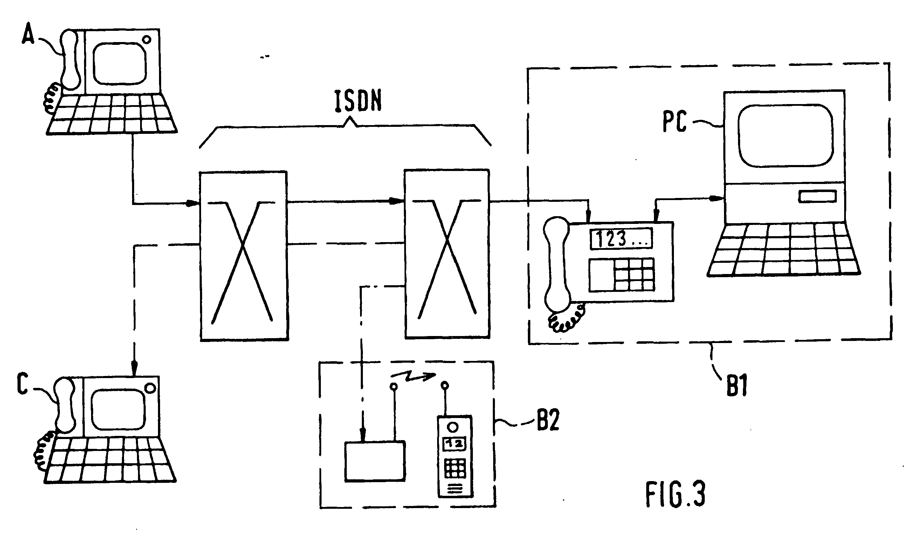

In Fig. 3 ist ein Telekommunikationsnetz ISDN dargestellt, in dem Signalisierung und Nutzinformation digital übertragen werden, und das für die Übertragung verschiedener Dienste im Sinne eines Multi-Media-fähigen Netzes geeignet ist. Ein derartiges Netz ist beispielsweise das standardisierte Breitband-Telekommunikationsnetz " B-ISDN ". An das in Fig. 3 schematisch dargestellte Telekommunikationsnetz ISDN ist eine erfindungsgemäße Telekommunikationsendeinrichtung B1 angeschlossen, die ein Datenverarbeitungsendgerät PC enthält, der hier ein Personal Computer ist.

Befindet sich der Angerufene nicht am Ort der Telekommunikationsendeinrichtung B1, so soll er trotzdem eine Meldung über ankommende Rufe, deren Inhalt wichtig ist, erhalten. Dazu wertet das Datenverarbeitungsendgerät PC Nutzinformation der ankommenden Rufe aus und steuert das Absenden von Meldungen an mindestens eine weitere Telekommunikationsendeinrichtung, wie z.B. eine Kurztextmeldung (Short Message) an ein Mobilfunktelefon B2, an dem der Angerufene erreichbar ist. Der gesamte Inhalt des ankommenden Rufes, d.h. die gesamte Nutzinformation, die etwa aus alphanumerischen Daten besteht, wird in dem Personal-Computer PC der Telekommunikationsendeinrichtung B1 gespeichert, die sich am Arbeitsplatz des Angerufenen befindet.

Erhält der Angerufene die Meldung, daß vom Anrufenden A ein Ruf mit "wichtigem" Inhalt in der Telekommunikationsendeinrichtung B1 gespeichert worden ist, so kann er von seinem momentanen Standort, d.h. hier vom Mobiltelefon B2, aus reagieren. Beispielsweise ruft er sofort den Anrufenden A zurück, oder er veranlaßt zunächst eine Übertragung der gespeicherten Nutzinformation von der Telekommunikationsendeinrichtung B1 zu einer weiteren Telekommunikationsendeinrichtung C, die sich möglicherweise in der Wohnung des Angerufenen befindet. Es ist auch möglich infolge eines ankommenden Rufes an die beiden Telekommunikationsendeinrichtungen B2 und C jeweils eine Meldung zu senden. Die Meldungen können unterschiedlich und auf die jeweilige Telekommunikationsendeinrichtung angepaßt sein. Danach wird eine Kurztext-Meldung Mobiltelefon B2 und eine Volltext-Meldung (Gesamtinhalt) an die Telekommunikationsendeinrichtung C gesendet.

Beispielhaft wird im folgenden der Aufbau und die Funktionsweise der erfindungsgemäßen Telekommunikationsendeinrichtung B1 weiter beschrieben:

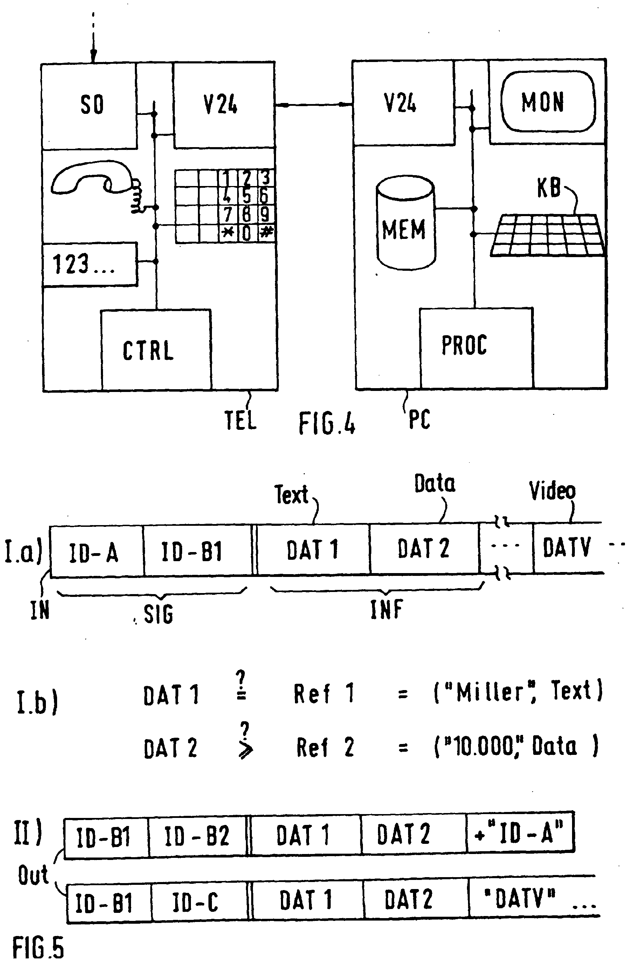

In Fig. 4 ist schematisch eine Ausführungsform der Telekommunikationsendeinrichtung B1 dargestellt. Diese enthält ein Telekommunikationsendgerät TEL und ein daran angeschlossenes Datenverarbeitungsendgerät PC. Das Telekommunikationsendgerät TEL ist als digitales Telefon ausgeführt, das eine Mikroprozessorschaltung CTRL und zwei damit verbundene Schnittstellenschaltungen S0 und V24 enthält. Eine der Schnittstellenschaltungen S0 dient zum Anschluß des Telefons an ein digitales Telekommunikationsnetz, beispielsweise das ISDN-Netz. Die andere Schnittstellenschaltung V24 dient zum Anschluß des Datenverarbeitungsendgerätes PC an das Telefon.

Das Datenverarbeitungsendgerät PC ist hier als Personal-Computer mit einem Zentralprozessor PROC, einem Festplatten-Speicher MEM, einer Tastatur KB, einem Bildschirm MON und einer Schnittstellenschaltung V24 ausgeführt.

Über letztere wird bei einem ankommenden Ruf, zumindest die Nutzinformation in den Personal-Computer PC übertragen. Dieser speichert die Nutzinformation, die etwa aus Text-, Sprach- und/oder Bilddaten besteht. Danach wird zumindest ein Teil der Nutzinformation, wie etwa einzelne Datenfelder innerhalb der Textdaten, ausgewertet, um zu prüfen ob der Inhalt des angekommenen Rufes so wichtig ist, daß eine Meldung an den sich andernorts befindenden Angerufenen gesendet wird.

Diese Meldung wird mittels des Personal-Computers PC an dasjenige Telekommunikationsendgerät gesendet, das der Angerufene angegeben hat oder das durch Signalisierung der persönlichen Teilnehmernummer des Angerufenen angewählt wird. Weiterhin steuert der Personal-Computer PC die Aufbereitung der Meldung derart, daß diese nur solche Teile der Nutzinformation (z.B. alphanumerische Daten) enthält, die das ausgewählte Telekommunikationsendgerät (z.B. Mobiltelefon mit alphanumerischer Anzeige) empfangen kann. Darüberhinaus kann die Meldung durch Vorgaben des Angerufenen weiter beschränkt werden, d.h. auf bestimmte Datenfelder, die etwa Stückzahlen für einen Auftragseingang oder Preise für ein Warenangebot wiedergeben. Eine derartige Meldung ist demnach kurz und enthält die wesentliche Information, die der Angerufene wünscht.

Die Auswertung der Nutzinformation des ankommenden Rufes und die Aufbereitung der Meldungen innerhalb des Personal-Computers PC wird nun anhand der Fig. 5.a) und b) I) bzw. 5.II) genau beschrieben:

In Fig. 5.Ia) ist schematisch der Inhalt des ankommenden Rufes IN dargestellt, den die Telekommunikationsendeinrichtung als Datensequenz empfängt. Diese Datensequenz enthält Signalisierungsinformation SIG, mit einer Kennung ID-A der rufenden und mit einer Kennung ID-B1 für die gerufene Telekommunikationsendeinrichtung. Weiterhin enthält die Datensequenz IN Nutzinformation INF, die sich aus unterschiedlichen Datenarten zusammensetzt. Beispielhaft sind hier drei verschiedene Datenarten Text, Data und Video für Schriftzeichen, numerische Zeichen und Grafikzeichen gewählt. Die Nutzinformation INF ist in mehrere Datenfelder DAT1, DAT2, DATV unterteilt, die jeweils einem der Datenarten zugeordnet sind.

Zur Auswertung der empfangenen Nutzinformation vergleicht der Personal-Computer PC nur einen Teil der Nutzinformation, d.h. Daten aus einzelnen Datenfelder DAT1 und DAT2 mit vorgegebenen Referenzdaten Ref1 bzw. Ref2.

Beispielsweise ist in Fig. 5.Ib) dargestellt, wie geprüft wird, ob der Eintrag im Datenfeld DAT1 (Name des Kunden) gleich "Miller" ist und ob der Eintrag im Datenfeld DAT2 (Stückzahl der bestellten Ware) größer gleich "10.000" ist. Anhand dieser vom Benutzer (Angerufenen) vorgegebenen Kriterien, trifft der Personal-Computer PC eine qualitative Auswahl der ankommenden Rufe. Das gezeigte Beispiel ist einfach gewählt. Es sind auch komplexere Auswertungen der Nutzinformation denkbar, so etwa mittels Verfahren zur Sprachmuster- oder Bildmustererkennung.

In Fig. 5.II) sind mögliche Meldungen dargestellt, die von dem Personal-Computer PC erstellt und über das Telekommunikationsendgerät TEL abgesendet werden, falls der Inhalt des ankommenden Rufes die vorgegebenen Kriterien erfüllt. Dazu stellt der Personal-Computer PC mehrere der Datenfelder DAT1, DAT2 usw. zu einer zu sendenden Datensequenz zusammen. Dieser wird als Signalisierungsinformation die Kennung ID-81 Telekommunikationsendeinrichtung B1 und die Kennung ID-B2 der zu rufenden Telekommunikationsendeinrichtung B2 hinzugefügt. Weiterhin enthält die Meldung etwa die entschlüsselte Kennung "ID-A", der ursprünglich rufenden Telekommunikationsendeinrichtung A, d.h. Information zur Identifizierung des Anrufenden. Eine weitere Meldung, die einen Teil der empfangenen Bilddaten "DATV" enthält wird zu einer weiteren Telekommunikationsendeinrichtung C mit der Kennung ID-C gesendet.

Zum Absenden der Meldungen steuert der Personal-Computer PC über die Schnittstellen V24 das Telekommunikationsendgerät TEL, das die Protokollabwicklung 3 für das digitale Telekommunikationsnetz ISDN durchführt.

Das beschriebene Ausführungsbeispiel enthält alle Grundzüge der Erfindung. Es sind darüberhinaus auch zahlreiche, weitere Ausführungsbeispiele denkbar, die etwa auf hochintegrierte Telekommunikationsendeinrichtungen (z.B. Multi-Media-Terminal) oder auf komplexe Telekommunikationsnetze mit IN-Funktionen (IN: Intelligentes Netz, wie z.B. UMTS: Universal Mobile Telecommunication System) abzielen.

## Patentansprüche

1. Telekommunikationsendeinrichtung (B1) umfassend ein Telekommunikationsendgerät (TEL, T1) und einem damit verbundenen Datenverarbeitungsendgerät (PC), wobei das Telekommunikationsendgerät (TEL, T1) mit einem Telekommunikationsnetz (ISDN) verbunden ist, über das Signalisierungsinformationen und Nutzinformationen übertragen werden, **dadurch gekennzeichnet, daß** das Telekommunikationsendgerät (TEL, T1) und das Datenverarbeitungsendgerät (PC) derart ausgestaltet sind, daß zumindest Nutzinformation eines eingehenden Rufes von dem Telekommunikationsendgerät (TEL, T1) an das Datenverarbeitungsendgerät (PC) übertragen und zumindest ein Teil der Nutzinformation von dem Datenverarbeitungsendgerät (PC) nach mindestens einem vorgegebenen Kriterium ausgewertet wird, wobei, falls das zumindest eine Kriterium erfüllt ist, eine Meldung an mindestens ein weiteres Telekommunikationsendgerät (T2, Tx, Tn, A, C, B2) gesendet wird.

2. Telekommunikationsendeinrichtung (B1) nach Anspruch 1, **dadurch gekennzeichnet, daß** das weitere Telekommunikationsendgerät (T2, Tx, Tn, A, C, B2) mit einer digitalen Kommunikationseinrichtung (PAD) mit Schrifterkennung verbunden ist.

3. Telekommunikationsendeinrichtung (B1) nach Anspruch 1 oder 2, **dadurch gekennzeichnet, daß** das weitere Telekommunikationsendgerät (T2, Tx, Tn, A, C, B2) ein Telefon, ein Funkempfänger oder ein Mobiltelefon ist.

4. Telekommunikationsendeinrichtung (B1), nach einem der Ansprüche 1 bis 3, **dadurch gekennzeichnet, dass** das Telekommunikationsendgerät (T1, TEL) und das damit verbundene Datenverarbeitungsendgerät (PC) ein Computer mit integrierter Telefonfunktion ist.

5. Telekommunikationsendeinrichtung (B1) nach einem der Ansprüche 1 bis 4, **dadurch gekennzeichnet, daß** die Meldung mindestens einen Teil der Nutzinformation umfaßt.

6. Telekommunikationsendeinrichtung (B1) nach einem der Ansprüch 1 bis 5, **dadurch gekennzeichnet, daß** Meldungen in ihrem Format an das empfangende Telekommunikationsendgerät angepaßt sind.

7. Telekommunikationsendeinrichtung (B1) nach einem der Ansprüche 1 bis 6, **dadurch gekennzeichnet, daß** die Nutzinformationen Text-, Sprach-, Bild- und/oder Videodaten umfassen.

8. Telekommunikationsendeinrichtung (B1) nach einem der Ansprüche 1 bis 7, **dadurch gekennzeichnet, daß** die Nutzinformation oder Teile der Nutzinformation einer Mehrzahl von Datenfeldern zugeordnet wird.

9. Telekommunikationsendeinrichtung (B1) nach einem der Ansprüche 1 bis 3, **dadurch gekennzeichnet, daß** das Telekommunikationsendgerät (TEL, T1) das damit verbundene Datenverarbeitungsendgerät (PC) enthält.

10. Telekommunikationsendeinrichtung (B1) nach einem der Ansprüche 1 bis 3, **dadurch gekennzeichnet, daß** das Telekommunikationsendgerät (TEL, T1) und das damit verbundene Datenverarbeitungsendgerät (PC) in einem Datenverarbeitungsendgerät mit Telefonfunktion integriert sind.

## Claims

1. Telecommunication terminal equipment (B1) comprising a telecommunication terminal (TEL, T1) and a thereto connected data processing terminal (PC), the telecommunication terminal (TEL, T1) being connected to a telecommunications network (ISDN), via which signalling information and user information are transmitted, **characterized in that** the telecommunication terminal (TEL, T1) and the data processing terminal (PC) are developed such that at least user information of an incoming call is transmitted from the telecommunication terminal (TEL, T1) to the data processing terminal (PC) and at least part of the user information is evaluated by the data processing terminal (PC) according to at least one preset criterion, a message being sent to at least one further telecommunication terminal (T2, Tx, Tn, A, C, B2) if the at least one criterion is satisfied.

2. Telecommunication terminal equipment (B1) according to claim 1, **characterized in that** the further telecommunication terminal (T2, Tx, Tn, A, C, B2) is connected to a digital communication facility (PAD) with handwriting recognition.

3. Telecommunication terminal equipment (B1) according to claim 1 or 2, **characterized in that** the further telecommunication terminal (T2, Tx, Tn, A, C, B2) is a telephone, a radio receiver or a mobile telephone.

4. Telecommunication terminal equipment (B1) according to one of claims 1 to 3, **characterized in that** the telecommunication terminal (T1, TEL) and the thereto connected data processing terminal (PC) is a computer with integrated telephone function.

5. Telecommunication terminal equipment (B1) according to one of claims 1 to 4, **characterized in that** the message contains at least a part of the user information.

6. Telecommunication terminal equipment (B1) according to one of claims 1 to 5, **characterized in that** messages are adapted (in their format) to the receiving telecommunication terminal.

7. Telecommunication terminal equipment (B1) according to one of claims 1 to 6, **characterized in that** the user information comprises text, voice, image and/or video data.

8. Telecommunication terminal equipment (B1) according to one of claims 1 to 7, **characterized in that** the user information or parts of the user information is assigned to a plurality of data fields.

9. Telecommunication terminal equipment (B1) according to one of claims 1 to 3, **characterized in that** the telecommunication terminal (TEL, T1) contains the thereto connected data processing terminal (PC).

10. Telecommunication terminal equipment (B1) according to one of claims 1 to 3, **characterized in that** the telecommunication terminal (TEL, T1) and the thereto connected data processing terminal (PC) are integrated in a data processing terminal with telephone function.

## Revendications

1. Dispositif terminal de télécommunication (B1) comprenant un terminal de télécommunication (TEL, T1) et un terminal de traitement de données (PC) relié à celui-ci, le terminal de télécommunication (TEL, T1) étant relié à un réseau de télécommunication (ISDN) par le biais duquel sont transmis des informations de signalisation et des informations utiles, **caractérisé en ce que** le terminal de télécommunication (TEL, T1) et le terminal de traitement de données (PC) sont configurés de telle sorte qu'au moins les informations utiles d'un appel entrant sont transmises du terminal de télécommunication (TEL, T1) au terminal de traitement de données (PC) et au moins une partie des informations utiles sont analysées par le terminal de traitement de données (PC) pour vérifier au moins un critère prédéfini, un message étant envoyé à au moins un terminal de télécommunication supplémentaire (T2, Tx, Tn, A, C, B2) si l'au moins un critère est rempli.

2. Dispositif terminal de télécommunication (B1) selon la revendication 1, **caractérisé en ce que** le terminal de télécommunication supplémentaire (T2, Tx, Tn, A, C, B2) est relié à un dispositif de communication numérique (PDA) avec reconnaissance de l'écriture.

3. Dispositif terminal de télécommunication (B1) selon la revendication 1 ou 2, **caractérisé en ce que** le terminal de télécommunication supplémentaire (T2, Tx, Tn, A, C, B2) est un téléphone, un récepteur de radiocommunication ou un téléphone mobile.

4. Dispositif terminal de télécommunication (B1) selon l'une des revendications 1 à 3, **caractérisé en ce que** le terminal de télécommunication (TEL, T1) et le terminal de traitement de données (PC) qui y est relié est un ordinateur disposant d'une fonction téléphonique.

5. Dispositif terminal de télécommunication (B1) selon l'une des revendications 1 à 4, **caractérisé en ce que** le message comprend au moins une partie des informations utiles.

6. Dispositif terminal de télécommunication (B1) selon l'une des revendications 1 à 5, **caractérisé en ce que** le format des messages est adapté au terminal de télécommunication récepteur.

7. Dispositif terminal de télécommunication (B1) selon l'une des revendications 1 à 6, **caractérisé en ce que** les informations utiles comprennent des données textuelles, vocales, d'image et/ou vidéo.

8. Dispositif terminal de télécommunication (B1) selon l'une des revendications 1 à 7, **caractérisé en ce que** les informations utiles ou des parties des informations utiles sont associées à une pluralité de champ de données.

9. Dispositif terminal de télécommunication (B1) selon l'une des revendications 1 à 3, **caractérisé en ce que** le terminal de télécommunication (TEL, T1) contient le terminal de traitement de données (PC) qui y est relié.

10. Dispositif terminal de télécommunication (B1) selon l'une des revendications 1 à 3, **caractérisé en ce que** le terminal de télécommunication (TEL, T1) et le terminal de traitement de données (PC) qui y est relié sont intégrés dans un terminal de traitement de données disposant d'une fonction téléphonique.
